## Europäisches Patentamt

## European Patent Office

## Office européen des brevets

(19)

(11) **EP 0 720 004 B1**

(12) **EUROPÄISCHE PATENTSCHRIFT**

(45) Veröffentlichungstag und Bekanntmachung des Hinweises auf die Patenterteilung:
**16.02.2000   Patentblatt 2000/07**

(51) Int Cl.$^7$: **G01D 3/08**

(21) Anmeldenummer: **95117943.1**

(22) Anmeldetag: **14.11.1995**

(54) **FDIC-Verfahren zur Minimierung von Messfehlern in einer Messanordnung von redundanten Sensoren**

FDIC-method for minimising measurement errors in a measurement arrangement with redundant sensors

Procédé FDIC pour minimiser les erreurs de mesure dans un dispositif de mesure à capteurs redondants

(84) Benannte Vertragsstaaten:
**DE ES FR GB IT**

(30) Priorität: **27.12.1994  DE 4446900**

(43) Veröffentlichungstag der Anmeldung:
**03.07.1996   Patentblatt 1996/27**

(73) Patentinhaber: **LITEF GmbH**
**79115 Freiburg (DE)**

(72) Erfinder: **Fischer, Harald, Dr. Dipl.-Phys.**
**D-79111 Freiburg (DE)**

(74) Vertreter: **Müller, Frithjof E., Dipl.-Ing. et al**
**Patentanwälte**
**MÜLLER & HOFFMANN,**
**Innere Wiener Strasse 17**
**81667 München (DE)**

(56) Entgegenhaltungen:
**EP-A- 0 416 370          DE-A- 4 100 501**

**Beschreibung**

Die Erfindung betrifft ein Verfahren zur Minimierung von aus mit möglichen Meßfehlern behafteten Sensoren bestimmten Meßgrößen, die über eine Mehrzahl solcher zu einer Meßanordnung verbundener redundanter Sensoren erfaßt werden, durch Erkennen und Isolation der fehlerhaften Sensoren. Verfahren dieser Art werden allgemein als FDIC-Verfahren bezeichnet (FDIC = Failure Detection, Isolation and Correction).

Stehen zur Messung einer zu bestimmenden Meßgröße redundante Sensoren zur Verfügung, so können im Prinzip durch Vergleich der von den Sensoren gelieferten Daten Fehler in einzelnen oder auch mehreren Sensoren erkannt werden. Wenn zusätzlich die fehlerhaften Sensoren isoliert werden, so kann durch Weglassen der als fehlerhaft erkannten Sensoren der Meßfehler eliminiert werden.

Diese Problemstellung ist sehr allgemein und tritt bei einer Vielzahl von möglichen Anwendungen auf. Nur als Beispiele seien hier die Anwendungen:

- Messung von Bewegung in Inertialsystemen mit redundanten (eventuell schiefachsigen) Inertialsensoren (Kreisel, Beschleunigungsmesser),
- Positionsbestimmung in Satellitennavigationssystemen bei redundanter Satellitenkonfiguration

genannt.

Existierende Verfahren zur Lösung des Problems lassen sich grob in zwei Kategorien einteilen:

- die Gruppierung der Gesamtsensoren in Sensorkombinationen mit minimaler Redundanz mit Bewertung aller Einzelkombinationen und anschliessender kombinatorischer Logik zur Bestimmung der größtmöglichen fehlerfreien Sensorkombination (Paritätsverfahren).

- die Isolierung desjenigen einzelnen Sensors, der am meisten zur Gesamtdiskrepanz beiträgt (Chi-Square Kriterium) und anschließendem Weglassen dieses Sensors ("Maximum-Likelihood"-Verfahren).

Die bekannten Nachteile dieser Verfahren sind
bei Paritätsverfahren:

- die Zahl der zu betrachtenden Einzelkombinationen mit minimaler Redundanz wächst kombinatorisch (d.h. wie n!) mit der Zahl der Sensoren. Da die Parität jeder Kombination bewertet werden muß, steigt der Aufwand des Verfahrens in gleichem Maße.

- die Bewertung jeder Einzelparität erfolgt diskret als entweder "Gut" oder "Schlecht" durch Vergleich mit vorgegebenen Schwellwerten. Eine Parität, die einen Schwellwert nur knapp verletzt, wird nicht unterschieden von einer großen Schwellwertverletzung. Gleiches gilt für Schwellwertunterschreitungen. Das resultierende Gesamtmuster der Paritätsverletzungen erlaubt dadurch in einem verhältnismäßig breiten Bereich von Sensorfehlern keine eindeutige Interpretation und muß mit Hilfe von Heuristiken interpretiert werden. Dies kann zu unnötigen Fehlinterpretationen führen. Die zusätzliche Einführung verschiedener ("großer" und "kleiner") Schwellwerte kann dieses Problem nur teilweise abmildern und erhöht den Aufwand des Verfahrens.

- bedingt durch die in der Regel feste Wahl von Schwellwerten führt ein unerwartet großes Rauschen aller Sensorwerte zu einem vollständigen Versagen des Verfahrens, da möglicherweise alle Einzelkombinationen die Schwellwerte überschreiten und jenseits der Schwellwerte nicht mehr differenziert wird. Zur Vermeidung dieses Problems müssen die Schwellwerte an den schlimmstmöglichen Fall angepaßt werden, was zu unerwünscht großer Unempfindlichkeit des Verfahrens im "Normalbetrieb" führt.

- bedingt durch die grobe Einteilung der Einzelparitäten in größer/kleiner als Schwellwert, können Singularitäten, das heißt Sensordatenkombinationen, die eine eindeutige Isolation des Fehlers prinzipiell nicht zulassen, nur grob erfaßt und nur teilweise von eindeutigen Situationen unterschieden werden. Dies hat zur Folge, daß entweder Singularitäten unentdeckt bleiben, oder daß auch eigentlich eindeutige Fälle als Singularität behandelt werden. Die Nichtentdeckung von Singularitäten kann zu Fehlentscheidungen führen und auch die Behandlung von eigentlich eindeutigen Fällen als Singularität kann die Integrität des Verfahrens mindern, da bei der Singularitätsbehandlung in der Regel auf weniger verläßliche Information zurückgegriffen wird.

Bei "Maximum-Likelihood"-Verfahren:

- Da diese Verfahren davon ausgehen, daß zu einer bestimmten Zeit jeweils nur ein Sensor fehlerhafte Daten liefert, können beim gleichzeitigen tatsächlichen Auftreten von Mehrfachfehlern falsche Isolationsentscheidungen getroffen werden.

- Nach dem Auftreten und der Isolation eines Einzelfehlers müssen die Parameter des Verfahrens in Echtzeit auf die entsprechende (n-1)-Sensor Konfiguration umkonfiguriert werden, um auch eventuell später auftretende weitere Einzelfehler zu erkennen und zu isolieren. Das weitere Verhalten der bisher als fehlerhaft isolierten Sensoren geht in dieser neuen Konfiguration nicht mehr ein. Eine eventuell erfolgende "Heilung" dieser Sensoren kann nur durch parallele Bearbeitung mehrerer Konfigurationen erkannt werden, was den Verarbeitungsaufwand des Verfahrens entsprechend erhöht.

In EP-A-0 416 370 ist ein Verfahren zur Minimierung von aus mit möglichen Meßfehlern behafteten Sensoren abgeleiteten Meßgrößen beschrieben, bei dem aus Meßwerten ein Paritätsvektor gebildet wird. Der Betrag dieses Paritätsvektors wird als Maß für das Vorhandensein eines Meßfehlers ausgenutzt, wobei aus einer Meßanordnung bzw. "Meßmatrix" charakteristische Vektoren, sogenannte "Validierungsvektoren" gebildet werden.

Weiterhin ist aus DE-A-41 00 501 ein Verfahren zum Erkennen von Fehlern an Sensoren für Zustandsgrößen bekannt, bei dem unter Berücksichtigung zeitvarianter, stochastischer Fehler, deren statistische Eigenschaften nicht bekannt sind, eine Fehlerdetektion und Lokalisierung möglich ist.

Der Erfindung liegt damit die Aufgabe zugrunde, ein verbessertes FDIC-Verfahren vorzustellen, das frei ist von den aufgeführten Nachteilen des Standes der Technik, die sich bei Paritätsverfahren bzw. Maximum-Likelikhood-Verfahren ergeben.

Das erfindungsgemäße Verfahren zur Minimierung von Meßfehlern nach der eingangs erwähnten Gattung ist erfindungsgemäß durch die Merkmale des Patentanspruches 1 definiert.

Vorteilhafte Weiterbildungen und Ergänzungen des Erfindungsgedankens sind in abhängigen Patentansprüchen enthalten und werden in der nachfolgenden Beschreibung zunächst allgemein und sodann anhand von Beispielen verdeutlicht und veranschaulicht. So dient beispielsweise die ergänzende Verfahrensvariante nach Patentanspruch 2 dazu, das Verfahren auch bei hohen Verarbeitungsfrequenzen praktikabel zu ermöglichen, bei denen die tatsächliche Durchführung der Verarbeitung gemäß der Definition nach Anspruch 1 zu viele Rechenleistung erfordern würde.

Das erfindungsgemäße Verfahren unterscheidet sich wesentlich von den bisher bekannten und oben vorgestellten Verfahren durch

- die geometrische Interpretation der Eigenschaften des Paritätsraums und deren konsequente Nutzung zur Isolation von gleichzeitig auftretenden Mehrfachfehlern;

- die "Off-Line"-Analyse der Richtungen im Paritätsraum und das Bereitstellen der Isolationsergebnisse in einer vorab berechneten Tabelle, sowie durch

- die wahlweise mögliche adaptive Anpassung der Detektionsschwellen an das allgemeine Rauschen der fehlerfreien Sensoren.

Die von allen Sensoren gemessenen Sensorwerte (Messvektor) werden durch eine lineare Transformation in einen Vektor im Paritätsraum abgebildet. Die Dimension des Paritätsraumes wird durch die Redundanz der Messanordung, das heißt durch die Zahl der Sensoren und die Dimension der zu messenden Größe bestimmt. Beispielsweise ist bei 8 schiefachsigen Messachsen zur Messung einer 3-dimensionalen Bewegungsgröße (z.B. Drehrate oder Beschleunigung) die Dimension des zugehörigen Paritätsraumes gleich 5. In diesem Paritätsraum läßt sich eine Anzahl von Unterräumen definieren, die jeweils für eine bestimmte Kombination von Sensorfehlern charakteristisch sind. Bei dem oben genannten Beispiel von 8 einzelnen Sensorachsen zur Messung einer 3-dimensionalen Größe sind diese Unterräume:

- 8 eindimensionale Unterräume (Geraden) zur Charakterisierung von Ein-Achsen Fehlern

- 28 zweidimensionale Unterräume (Ebenen) zur Charakterisierung von Zwei-Achsen Fehlern

- 56 dreidimensionale Unterräume zur Charakterisierung von Drei-Achsen Fehlern

- 70 vierdimensionale Unterräume zur Charakterisierung von Vier-Achsen Fehlern

(Anmerkung: Fünf-achsige Fehler können noch erkannt, jedoch nicht isoliert werden, und mehr-achsige Fehler können mit der Sensoranordnung dieses Beispiels schon nicht mehr erkannt werden.)

Diese Unterräume charakterisieren Fehlerkombinationen in der Weise, daß bei Vorliegen einer bestimmten Fehlerkombination der resultierende Paritätsvektor vollständig in dem betreffenden Unterraum liegt.

Das Prinzip des Verfahrens besteht darin, daß durch Projektion des gemessenen Paritätsvektors auf alle möglichen Unterräume bestimmt wird, welcher der Unterräume zu jeder Fehlerstufe (Ein-Achsen, Zwei-Achsen,...) den größten Anteil des gemessenen Paritätsvektors beinhaltet. Durch Weglassen der zu diesen Unterräumen gehörenden Sensorkombinationen kann dann auf jeder Fehlerstufe die beste Sensorkombination ermittelt werden. Das Ergebnis dieser Fehlerisolation ist unabhängig von irgendwelchen Schwellwerten, da es nicht vom Betrag (der Länge) des gemessenen Paritätsvektors, sondern allein durch dessen Richtung bestimmt wird. Der Betrag des Paritätsvektors, beziehungsweise der Projektion des Paritätsvektors auf die Unterräume wird lediglich zur Fehlerdetektion herangezogen, das heißt um zu entscheiden, ob überhaupt ein Fehler vorliegt, oder ob ein Einzel-, Doppel-, Dreifach-Fehler,..., angenommen werden muß. (Auch diese Entscheidung kann ohne "a priori" Schwellwerte getroffen werden, wenn man optional die Projektionen auf die Unterräume mit minimaler Redundanz als Maß für diese Schwellwerte heranzieht.)

Zur praktischen Realisierung dieses Prinzips in Echtzeitverarbeitung sind Effizienzsteigerungen wesentlich. Da die Fehlerisolation nur von der Richtung des Paritätsvektors abhängt, kann die Berechnung der Projektionen des Paritätsvektors auf die charakteristischen Unterräume offline außerhalb der Echtzeitanwendung erfolgen und das Ergebnis der Fehlerisolation in einer Tabelle zur Verfügung gestellt werden. Der in Echtzeit zu erbringende Aufwand ist dann auf die Berechnung des Paritätsvektors und eines Tabellenschlüssels aus der Richtung des Paritätsvektors beschränkt, unter dem dann die Ergebnisse der Fehlerisolation aus der Tabelle abgerufen werden. Zur Minimierung der benötigten Tabellengröße können die Symmetrien im Paritätsraum, die sich aus der Symmetrie der Sensorachsenanordnung ergeben, genutzt werden.

Die mit diesem Verfahren erreichbaren Verbesserungen sind:

- die Fehlerisolation erfolgt schwellwertfrei, das heißt, sie kann ohne "a priori" Annahmen über tatsächliches Rauschen der fehlerfreien Sensoren erfolgen.

- die tatsächlich erreichbare Empfindlichkeit der Fehlererkennung, und damit die Güte des Ausgangssignals, kann adaptiv an das Rauschen der fehlerfreien Sensoren angepaßt werden.

- bei der Isolation des Fehlers werden scheinbare Singularitäten vermieden und tatsächliche Singularitäten werden als solche erkannt.

- im Gegensatz zu existierenden Paritätsverfahren wird der in Echtzeit zu leistende Verarbeitungsaufwand zur Fehlererkennung und Isolation im Prinzip allein durch die Dimension des Paritätsraumes bestimmt und ist unabhängig von der Zahl der möglichen Sensorkombinationen. So können beispielsweise die 163 möglichen Kombinationen von 8 einachsigen, schiefachsig angeordneten Beschleunigungsmessern mit dem gleichen Aufwand isoliert werden wie die 11 möglichen Kombinationen von 4 zweiachsigen, schiefachsig angeordneten Kreiseln.

- im Gegensatz zu existierenden "Maximum Likelihood"-Verfahren werden auch gleichzeitig auftretende Mehrfachfehler im Rahmen der prinzipiellen Grenzen immer richtig erkannt und isoliert.

Das erfindungsgemäße Verfahren wird nachfolgend in drei Abschnitten vorgestellt, wobei

- im Abschnitt A die Grundlagen,
- im Abschnitt B die Durchführung des Verfahrens zur Fehlererkennung anhand von Flußdiagrammen und
- im Abschnitt C zwei Anwendungsbeispiele

ausführlich erläutert werden.

Zur Erläuterung wird auf die beigefügten Zeichnungen Bezug genommen, wobei

Fig. 1 eine statistische Dichteverteilung (Chi-Quadratverteilung) der resultierenden Länge eines Paritätsvektors für Freiheitsgrade von 1 bis 5 veranschaulicht;

Fig. 2 Falschalarmwahrscheinlichkeiten in Abhängigkeit von vorgebbaren Schwellenwerten für verschiedene Freiheitsgrade erkennen läßt;

Fig. 3 das Flußdiagramm eines erfindungsgemäßen Verfahrensablaufs verdeutlicht;

Fig. 4 einen Verfahrensablauf mit gespeicherter Isolationsentscheidung zeigt; und

Fig. 5 den Paritätsraum für ein Anwendungsbeispiel verdeutlicht, bei dem zur Messung einer skalaren Meßgröße vier Sensoren vorgesehen sind.

**A. Grundlagen**

Als Grundlage des Verfahrens wird von einer linearen beziehungsweise linearisierten Beziehung zwischen den zu bestimmenden Größen und den im fehlerfreien Fall gemessenen Sensorwerten ausgegangen.

$$s = A\,x + e \tag{1}$$

wobei s die zu Messvektoren zusammengefassten Sensorwerte, x die zu messende Größe und e den Sensorfehler kennzeichnen. Die Matrix A beschreibt die Beziehung zwischen beiden für den fehlerfreien Fall.

Der Schätzwert für die zu messende Größe ergibt sich aus gemessenen Sensorwerten gemäß

$$\hat{x} = H\,s$$
$$H = (A^{T}A)^{-1}\,A \tag{2}$$

wobei H als Pseudoinverse der Matrix A den linearen "Least-Squares" Fit liefert, und im Weiteren angenommen wird, daß die auftretende Inverse existiert, das heißt die Messgröße überhaupt bestimmbar ist.

Für die Residuen, das heißt die Abweichungen zwischen tatsächlichen (fehlerbehafteten) Sensorwerten und denen zur geschätzten Meßgröße gehörenden Sensorwerten gilt

$$r = s - A\,\hat{x}$$
$$= (1 - A\,H)\,s$$
$$= R\,s \tag{3}$$

Die Größe des Residuenvektors r ist ein Maß für die Konsistenz der Sensordaten in der Weise, daß bei vollständig konsistenten Sensordaten r gleich Null ist, während bei fehlerbehafteten Sensordaten r von Null verschieden ist und im Prinzip Rückschlüsse über den Fehler erlaubt. Zur effizienten Analyse der Sensordatenkonsistenz wird jedoch nicht direkt von r ausgegangen, sondern zunächst R gemäß

$$R = V^{T}\begin{pmatrix} \lambda_1 & 0 & \cdots & 0 \\ 0 & \lambda_2 & \cdots & 0 \\ \vdots & & \ddots & \vdots \\ 0 & \cdots & 0 & \lambda_n \end{pmatrix} V \tag{4}$$

diagonalisiert. R ist nach Definition reell und symmetrisch, so daß diese Diagonalisierung immer möglich ist. Weiterhin gilt für die Eigenwerte $\lambda_i$, daß sie nur die Werte 0 und 1 annehmen können, wobei die Entartung des Eigenwertes 0 durch die Dimension der Messgröße und die Entartung des Eigenwertes 1 durch die Zahl der redundanten Sensoren bestimmt ist. Für die Zerlegung von R nach (4) bedeutet dies, daß in der Matrix V nur die Zeilen zu den Eigenwerten 1 zu R beitragen. Sei m die Dimension der zu messenden Größe und *n* die Zahl der Sensoren, dann ist die Dimension der Matrix V (*n-m*) x *m*, und die (*n-m*) Zeilen von V lassen sich aus einem orthonormalisierten Satz von Eigenvektoren von R zum Eigenwert 1 konstruieren.

Die Matrix V besitzt folgende Eigenschaften

$$V^T V = R$$

$$V V^T = 1$$

$$R V^T = V^T$$

$$V R = V \qquad\qquad (5)$$

$$V H^T = 0$$

$$H V^T = 0$$

$$V A = 0$$

Die Abbildung

$$p = V s \qquad\qquad (6)$$

definiert zu einem Meßvektor s einen Paritätsvektor p, in dem sämtliche Information über den Fehlerzustand der Sensorwerte enthalten ist.

Insbesondere gilt

$$r^T r = p^T p \qquad\qquad (7)$$

das heißt, die Länge des Residuenvektors $r$ ist gleich der Länge des Paritätsvektors $p$ und dient als Maß für die Konsistenz der Sensorkombination, die alle Sensoren beinhaltet.

Aus der Richtung von $p$ kann in folgender Weise darauf geschlossen werden, welche Sensoren wieviel zu dem Gesamtfehler beitragen. Wenn beispielsweise ein einzelner Fehler in Sensor $i$ vorliegt, dann wird der gemäß (6) bestimmte Paritätsvektor vollständig in der durch die $i$-te Spalte von V definierten Richtung liegen. Bei einem Doppelfehler, -etwa in den Sensoren $i$ und $j$-, liegt der resultierende Paritätsvektor in der durch die $i$-te und $j$-te Spalte von V aufgespannten Ebene. Die Spaltenvektoren der Matrix V definieren also jeweils, -für bestimmte Fehlerkombinationen-, charakteristische Unterräume, in denen der resultierende Paritätsvektor enthalten ist. Diese Zuordnung von Unterräumen des Paritätsraumes zu Fehlerkombinationen läßt sich mit zunehmender Zahl von fehlerhaften Sensoren solange fortsetzen, wie die Menge der zugehörigen Spaltenvektoren noch nicht den gesamten Paritätsraum aufspannt. Bei n Sensoren und einer m-dimensionalen Messgröße hat der Paritätsraum die Dimension $(n\text{-}m)$ und die Matrix V besteht aus $n$ charakteristischen Spaltenvektoren. Der Paritätsraum kann erst durch $(n\text{-}m)$ Spaltenvektoren vollständig aufgespannt werden, das heißt, Fehler in bis zu $(n\text{-}m\text{-}1)$ Sensoren können auf diese Art isoliert werden.

Um die Hypothese, daß Fehler in einer bestimmten Kombination $k$ von Sensoren vorliegen, zu testen, wird eine der Projektionen

$$p_k = C_k \, p$$

$$o_k = O_k \, p \qquad\qquad (8)$$

mit der Eigenschaft

$$o_k^T o_k + p_k^T p_k = p^T p \qquad\qquad (9)$$

gebildet, wobei die Zeilen der Transformationsmatrix $C_k$ durch Orthonormalisieren der an der Kombination $k$ beteiligten Spaltenvektoren von V entstehen. Die entsprechende Transformation $O_k$ projiziert auf den jeweils orthogonalen Unterraum. Die Beziehung (9) kann dazu genutzt werden, jeweils nur die Projektion auf den Unterraum mit geringerer Dimensionalität zu bestimmen, wodurch der Verarbeitungsaufwand verringert wird.

Es gelten folgende **Konsistenzkriterien**:

Die Größen

$$e_k = p_k^T \, p_k$$

$$\delta_k = p^T \, p \, - \, p_k^T \, p_k \qquad (10)$$

sind ein Maß dafür, welcher Anteil der beobachteten Inkonsistenz von den an der Kombination $k$ beteiligten Sensoren herrührt, beziehungsweise noch verbleibt, wenn diese Sensoren weggelassen werden.

Die Gesamtzahl K von Sensorkombinationen, deren Fehler grundsätzlich isoliert werden können ist durch

$$K = \sum_{f=0}^{n-m-1} \binom{n}{f} \qquad (11)$$

gegeben, wobei der Summand jeweils die zu einer Fehlerstufe $f$ gehörige Zahl von Kombinationen ($f$ aus $n$) beschreibt, und die Summation sich vom fehlerfreien Fall ($f$=0) bis zur minimal erforderlichen Restredundanz ($f$=$n$-$m$-1) erstreckt. Für jede dieser Sensorfehlerkombinationen kann gemäß (8) die Konsistenz der verbleibenden Sensoren bestimmt werden, und durch Vergleich mit einem, von der Fehlerstufe abhängigen Schwellwert entschieden werden, ob die jeweils verbleibende Sensorkombination akzeptable Konsistenz bietet. Insbesondere können auch auf jeder Fehlerstufe die Sensorkombination in der Reihenfolge wachsender Inkonsistenz sortiert werden, und zu jeder Fehlerstufe die Kombination mit der besten Konsistenz ermittelt werden. Eine wichtige Eigenschaft des Paritätsvektors, die bei der praktischen Durchführung des Verfahrens ausgenutzt wird, besteht darin, daß die relativen Größen der Inkonsistenzen für die verschiedenen Sensorkombinationen allein durch die Orientierung des Paritätsvektors im Paritätsraum bestimmt sind. Die absolute Größe ist durch einen gemeinsamen Faktor aus dem Betrag des Paritätsvektors gegeben. Dieser hat jedoch keinen Einfluß auf die Reihenfolge der nach Inkonsistenzen sortierten Sensorkombinationen.

**Singularitäten**:

Unter bestimmten Fehlerbedingungen ist es möglich, daß für eine Fehlerstufe mehrere verschiedene Sensorkombinationen eine akzeptable Konsistenz liefern, beziehungsweise auch die beste Konsistenz nicht eindeutig bestimmt ist in der Weise, daß zwei verschiedene Sensorkombinationen Konsistenzwerte liefern, die sehr nahe beim Maximum liegen. In der geometrischen Interpretation des Paritätsraumes entspricht dieser Fall der Situation, daß der aus dem Messvektor bestimmte Paritätsvektor im Schnittraum zweier (oder mehrerer) charakteristischer Unterräume liegt. Tritt dieser Fall auf der maximalen Fehlerstufe auf, so liegt eine Singularität vor, und eine Fehlerisolation ist allein aufgrund der aktuell gemessenen Sensorwerte nicht eindeutig möglich. Eine Isolationsentscheidung kann dann eventuell über die Daten aus früheren Verarbeitungszyklen erfolgen, etwa in der Weise, daß eine frühere, eindeutig getroffene Isolationsentscheidung beibehalten wird, wenn diese auch für den gegenwertigen Singularitätsfall eine akzeptable Konsistenz liefert, oder daß auf zusätzlich verfügbare Statusinformation über die einzelnen Sensoren zurückgegriffen wird um Singularitäten aufzulösen.

**Schwellwertbestimmung:**

Bei der Festlegung von Detektionsschwellen als Akzeptanzkriterien für die Inkonsistenzen der verbleibenden Sensorkombinationen auf den verschiedenen Fehlerstufen, im folgenden auch als "Schwellwerte" bezeichnet, muß berücksichtigt werden, daß auch fehlerfreie Sensoren nicht absolut konsistente Meßdaten liefern, sondern mit gewissen Ungenauigkeiten behaftet sind.

Diese Ungenauigkeiten der fehlerfreien Sensoren legen eine Untergrenze für die zu wählenden Schwellwerte fest, wobei zusätzlich zur Vermeidung von Falschalarmen ein Sicherheitsfaktor berücksichtigt werden kann, der durch die statistische Verteilung der Ungenauigkeiten fehlerfreier Sensoren sowie die geforderte maximale Falschalarmrate bestimmt wird.

Eine Obergrenze für die zu wählenden Schwellwerte ergibt sich aus den externen Genauigkeitsanforderungen der Anwendung, in denen festgelegt ist, welche Fehler in der zu bestimmenden Meßgröße noch akzeptiert werden können, beziehungsweise mit welcher Rate versäumte Fehlererkennung ("missed detection") zulässig ist.

Für eine technisch sinnvolle Anwendung muß vorausgesetzt werden, daß die Ungenauigkeiten der fehlerfreien Sensoren eine hinreichend genaue Bestimmung der Meßgröße zulassen, das heißt, daß die Obergrenze für die Schwellwerte deutlich über der oben erwähnten Untergrenze liegen muß.

Setzt man für die Ungenauigkeiten der fehlerfreien Sensoren jeweils eine unabhängige, statistische Normalverteilung (mit Varianz 1, auf die dann die Schwellwerte bezogen sind) voraus, so ergibt sich für die statistische Dichte verteilung der resultierenden Länge des Paritätsvektors über die Beziehung (7) eine Chi-Quadratverteilung zum Freiheitsgrad $v=(n-m)$.

$$f(x,v) = \frac{x^{v/2-1} \exp(-x/2)}{2^{v/2} \, \Gamma(v/2)} \tag{12}$$

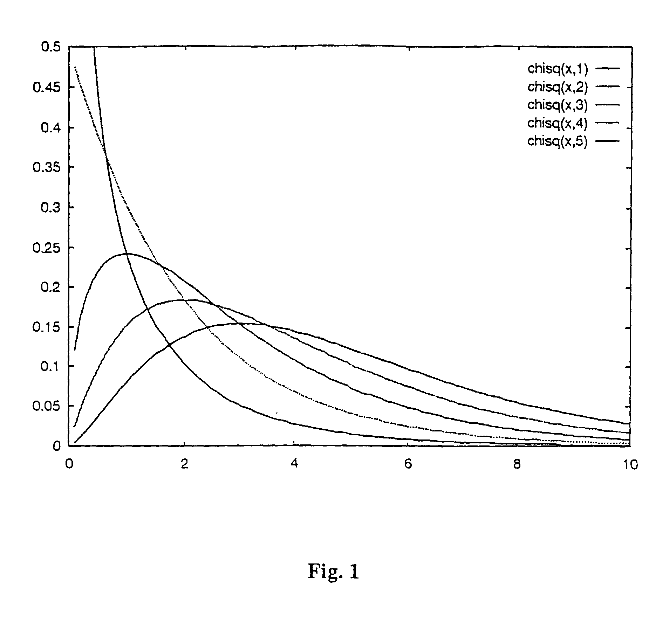

Diese Dichteverteilung ist in Fig. 1 für verschiedene Freiheitsgrade dargestellt. Dies entspricht bei fehlerfreien Sensoren der statistischen Verteilung der verbleibenden Inkonsistenzen $\delta_k$ auf den verschiedenen Fehlerstufen. Die Mittelwerte zu jedem Freiheitsgrad sind jeweils gleich dem Freiheitsgrad. Die Untergrenzen für die Schwellwerte $S^{min}$ für eine vorgegebene, maximal zulässige Falschalarmrate $P_f$ sind durch

$$P_f = 1 - \int_0^{S_v} f(x,v)\,dx \tag{13}$$

bestimmt, und die Obergrenzen für die Schwellwerte $S^{max}$ können bei einem maximal zulässigen Fehler $\Delta x_i$ der i-ten Komponente der zu bestimmenden Meßgröße zu

$$S_v^{max} = \frac{\Delta \hat{x}_i^2}{\sum_{j=1}^{n} H_{ij}^2}$$

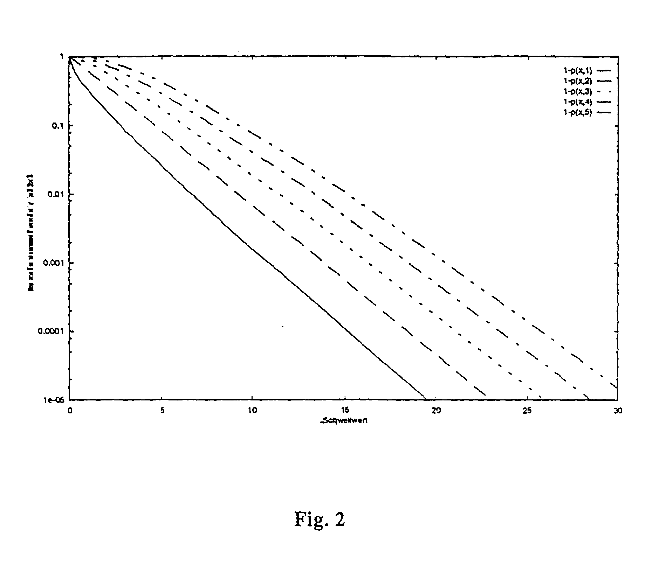

abgeschätzt werden, wobei $H_{ij}$ die Elemente der "Least-Squares" Transformationsmatrix sind. Die Fig. 2 gibt den Zusammenhang zwischen gewähltem Schwellwert (in Einheiten von $\sigma^2$ der Sensorungenauigkeit) und der resultierenden Falschalarmwahrscheinlichkeit.

Die so bestimmten Schwellwerte bewirken unter nominellen Bedingen, das heißt wenn die Sensorungenauigkeit der fehlerfreien Sensoren die angenommene Verteilung besitzt, die gewünschte Falschalarmrate und Fehlergrenzen für die Meßgröße. Allerdings können unter Umständen, bei denen (vorübergehend) alle Sensoren größere Ungenauigkeiten zeigen als angenommen, unerwünschte Fehlerdetektionen vorkommen. Um dies zu vermeiden, können die Schwellwerte dynamisch an die geringste Inkonsistenz der höchsten Fehlerstufe, das heißt an die Inkonsistenz der besten Sensorkombination mit minimaler Zahl redundanter Sensoren angepasst werden. Anstelle der oben bestimmten Schwellwerte $S^{nom}$ werden dann Schwellwerte der Form

$$S_v = \max[S_v^{nom}, a \cdot \min[\delta_k]] \tag{15}$$

gewählt, wobei der Faktor a abhängig von der Fehlerstufe, beziehungsweise dem Freiheitsgrad etwa in der Weise

$$a = v + 1$$

gewählt wird. Durch diese Wahl der Schwellwerte wird erreicht, daß das Verfahren auch bei unerwartet hoher Ungenauigkeit aller Sensoren spätestens auf der maximalen Fehlerstufe die beste Sensorkombination akzeptiert, und auch Fehler auf den niedrigeren Fehlerstufen nur dann detektiert werden, wenn tatsächlich einzelne Sensoren signifikant ungenauer sind als andere.

**B. Durchführung des Verfahrens**

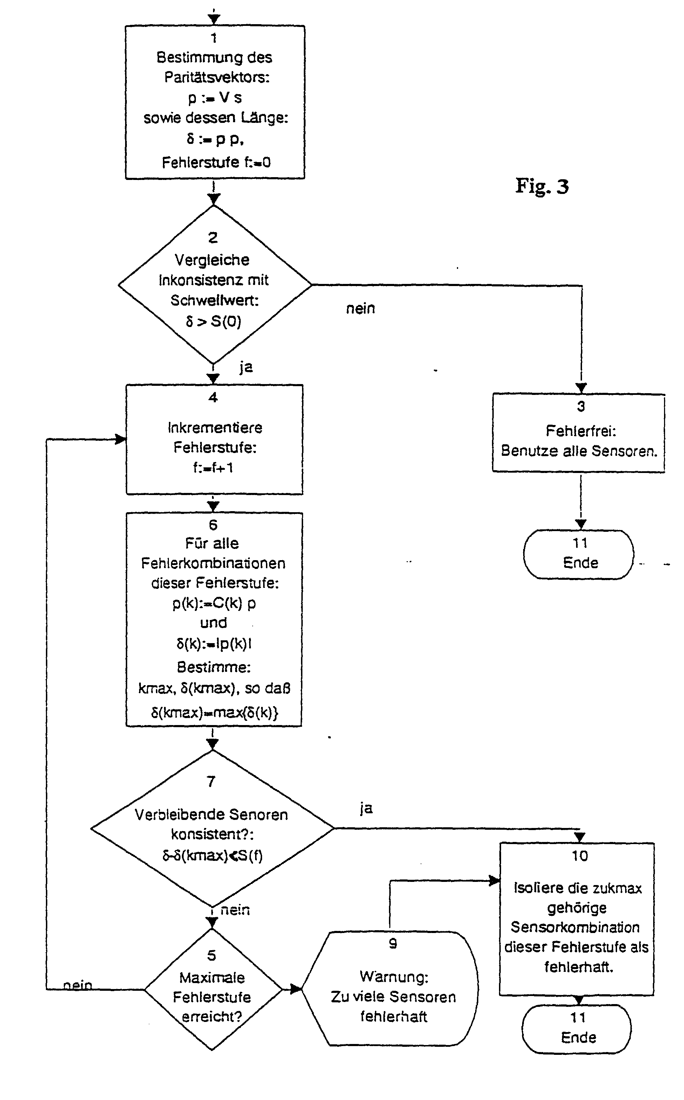

Zur Durchführung des Verfahrens zur Fehlererkennung und Isolation ist es in der Regel nicht erforderlich, daß jeweils alle Sensorkombinationen, bzw. Sensorfehlerkombinationen bewertet werden. Statt dessen kann das in Figur 3 schematisch dargestellte Verfahren benutzt werden.

Hierbei wird zunächst der Paritätsvektor bestimmt (Block 1) und daraus die Konsistenz der Gesamtsensorkombination ermittelt.

Durch Vergleich mit einem Schwellwert, der spezifisch für die Fehlerstufe $f$ (hier $f$=0) gewählt ist, wird detektiert (Block 2), ob die Konsistenz der Gesamtsensorkombination akzeptabel ist.

Falls dies zutrifft, sind alle Sensoren hinreichend fehlerfrei und können zur Ermittlung der Meßgröße herangezogen werden (Block 3). Das Verfahren ist dann, -für den aktuellen Verarbeitungszyklus-, abgeschlossen.

Andernfalls werden zunächst die Sensorkombinationen der Fehlerstufe 1, die durch Weglassen jeweils eines Sensors entstehen, bewertet (Block 6), und die beste Sensorkombination dieser Fehlerstufe bestimmt.

Falls diese beste Sensorkombination akzeptabel ist, das heißt die verbleibende Inkonsistenz unter einem (von der Fehlerstufe abhängigen) Schwellwert liegt (Block 5), kann die Isolationsentscheidung mit der besten Sensorkombination dieser Fehlerstufe beendet werden (Block 10).

Andernfalls wird geprüft, ob bereits die maximale Fehlerstufe erreicht ist (Block 5), und falls dies nicht der Fall ist, das Verfahren für die nächst höhere Fehlerstufe fortgesetzt (Sprung zu Block 4). Falls die maximale Fehlerstufe erreicht wurde, ohne daß in den verbleibenden Sensoren der maximalen Fehlerstufe eine ausreichende Konsistenz festgestellt wurde, wird davon ausgegangen, daß zu viele Sensoren fehlerhaft sind, und als "Notlösung" die Beste Sensorkombination der maximalen Fehlerstufe isoliert. Dieser Fall kann nur eintreten, wenn die Schwellwerte der einzelnen Fehlerstufe fest vorgegeben, und nicht dynamisch angepasst werden.

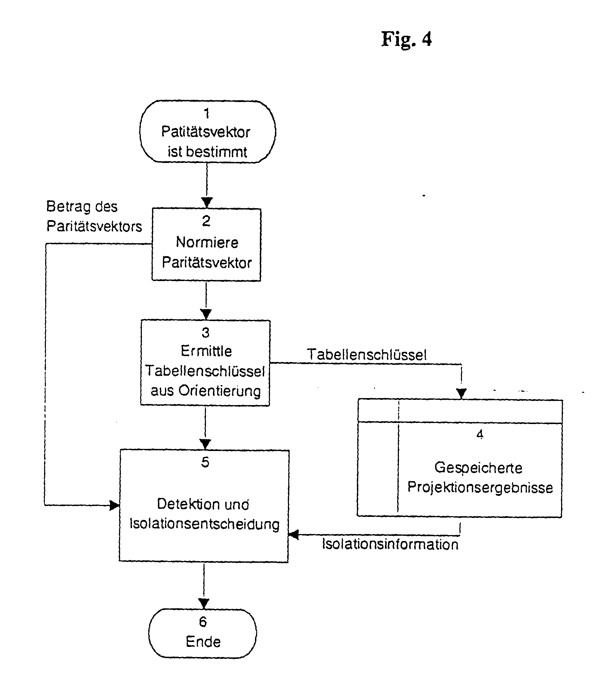

Bei Anwendungen, bei denen sich die Geometrie der Sensoranordnung, und damit auch die Geometrie der charakteristischen Unterräume im Paritätsraum, nicht oder im Vergleich zur geforderten Verarbeitungsfrequenz nur langsam ändert, kann zur weiteren Effizienzsteigerung ein Verfahren nach Fig. 4 gewählt werden.

Nachdem aus den Sensorwerten der Paritätsvektor bestimmt wurde (Block 1), wird die Norm des Paritätsvektors bestimmt, und der Paritätsvektor in geeigneter Weise normiert (Block 2). Eine für den hier geforderten Zweck besonders geeignete Normierung, besteht darin, die dem Betrag nach maximale Komponente durch Multiplikation aller Komponenten mit einem Faktor auf den Wert +1 zu normieren. Der Index der maximalen Komponente dient als erster Bestandteil des Tabellenschlüssels. Der restliche Anteil des Tabellenschlüssels wird dann aus den verbleibenden Komponenten des Paritätsvektors durch Quantisierung des jeweiligen Wertebereiches [-1,+1] in q gleichgroße Abschnitte gewonnen. Eine so gebildete Tabelle hat dann bei einem d-dimensionalen Paritätsraum und einer Quantisierung der Komponenten in q Abschnitte

$$Z = d \, q^{d-1}$$

Einträge, die jeweils eine Richtung des Paritätsvektors kodieren. Diese Zahl gibt eine Obergrenze, die durch Ausnutzung möglicher, anwendungsspezifischer Symmetrien im Paritätsraum weiter reduziert werden kann.

Nachdem aus den Komponenten des Paritätsvektors der Tabellenschlüssel bestimmt wurde (Block 3), wird die unter diesem Schlüssel gespeicherte Isolationsinformation (Block 4) abgerufen. Zu jedem Tabellenschlüssel (Richtung des Paritätsvektors) werden für jede Fehlerstufe $f$ die jeweils $f$ besten Sensorkombinationen in der Reihenfolge wachsender Inkonsistenz bereitgehalten.

Zur Detektion und Isolationsentscheidung (Block 5) werden dann auf jeder Fehlerstufe nur noch diese jeweils besten Sensorkombinationen durch Projektion des Paritätsvektors auf die zugehörigen Unterräume bewertet. Hierbei kann dann wieder die Reihenfolge des oben beschriebenen abgestuften Verfahrens benutzt werden.

Unabhängig davon, nach welchem dieser Verfahren die Konsistenz der Sensorkombinationen festgestellt wurde, erfolgt anschließend die Auswahl der tatsächlich zu verwendenden Sensorkombination. Zu jeder Sensorkombination existiert eine eigene Least-Squares Transformationsmatrix $H_i$, in der die wegzulassenden Sensoren nicht mehr berücksichtigt sind, und der Wert der zu messenden Größe ergibt sich gemäß (2) aus dem Meßvektor.

**C. Anwendungsbeispiele**

**Vier Thermometer**

In diesem Beispiel wird die Anwendung für einen besonders einfachen Fall demonstriert, bei dem zur Messung einer skalaren (1 dimensionalen) Messgröße redundante Sensoren verwendet werden. Hierbei wurden 4 Sensoren gewählt, damit einerseits auch die Isolation von gleichzeitig auftretenden Doppelfehlern möglich ist, andererseits der hier dreidimensionale Paritätsraum noch anschauliche Vorstellungen über die Geometrie im Paritätsraum zuläßt. Statt der hier genannten Thermometer zur Messung der Temperatur können natürlich in genau gleicher Weise irgendwelche anderen skalaren Messgrößen/Sensoren betrachtet werden. Die Beziehung zwischen der Temperatur und den Messwerten $T_i$ lautet hier

$$\begin{pmatrix} T_1 \\ T_2 \\ T_3 \\ T_4 \end{pmatrix} = \begin{pmatrix} 1 \\ 1 \\ 1 \\ 1 \end{pmatrix} \cdot T$$

Dann ist

$$H = \begin{pmatrix} \dfrac{1}{4} & \dfrac{1}{4} & \dfrac{1}{4} & \dfrac{1}{4} \end{pmatrix}$$

und

$$R = \begin{pmatrix} \dfrac{3}{4} & -\dfrac{1}{4} & -\dfrac{1}{4} & -\dfrac{1}{4} \\ -\dfrac{1}{4} & \dfrac{3}{4} & -\dfrac{1}{4} & -\dfrac{1}{4} \\ -\dfrac{1}{4} & -\dfrac{1}{4} & \dfrac{3}{4} & -\dfrac{1}{4} \\ -\dfrac{1}{4} & -\dfrac{1}{4} & -\dfrac{1}{4} & \dfrac{3}{4} \end{pmatrix}$$

mit einem

$$V = \begin{pmatrix} -\dfrac{1}{2} & \dfrac{1}{2} & -\dfrac{1}{2} & \dfrac{1}{2} \\[2mm] \dfrac{1}{2} & \dfrac{1}{2} & -\dfrac{1}{2} & -\dfrac{1}{2} \\[2mm] -\dfrac{1}{2} & \dfrac{1}{2} & \dfrac{1}{2} & -\dfrac{1}{2} \end{pmatrix}$$

Die Zahl der möglichen, isolierbaren Fehlerkombinationen ist hier $K=11$ und die entsprechenden Kombinationen mit den zugehörigen Projektionsmatrizen sind in nachfolgender Tabelle angegeben, wobei jeweils die Projektion auf den Unterraum kleinerer Dimension gewählt wurde.

Tab 1:

| Projektionsmatrizen für die charakteristischen Unterräume des 4-Thermometerbeispiels. | | |
|---|---|---|
| Zahl der fehlerhaften Sensoren | Fehlerhafte(r) Sensor(en) | Projektionsmatrizen |
| 1 | 1 | $C_k = \dfrac{1}{\sqrt{3}} \cdot (-1\ 1\ -1)$ |
| 1 | 2 | $C_k = \dfrac{1}{\sqrt{3}} \cdot (1\ 1\ 1)$ |
| 1 | 3 | $C_k = \dfrac{1}{\sqrt{3}} \cdot (-1\ -1\ 1)$ |
| 1 | 4 | $C_k = \dfrac{1}{\sqrt{3}} \cdot (1\ -1\ -1)$ |
| 2 | 1,2 | $O_k = \dfrac{1}{\sqrt{2}} \cdot (1\ 0\ -1)$ |
| 2 | 1,3 | $O_k = \dfrac{1}{\sqrt{2}} \cdot (0\ 1\ 1)$ |
| 2 | 1,4 | $O_k = \dfrac{1}{\sqrt{2}} \cdot (1\ 1\ 0)$ |
| 2 | 2,3 | $O_k = \dfrac{1}{\sqrt{2}} \cdot (1\ -1\ 0)$ |
| 2 | 2,4 | $O_k = \dfrac{1}{\sqrt{2}} \cdot (0\ 1\ -1)$ |
| 2 | 3,4 | $O_k = \dfrac{1}{\sqrt{2}} \cdot (1\ 0\ 1)$ |

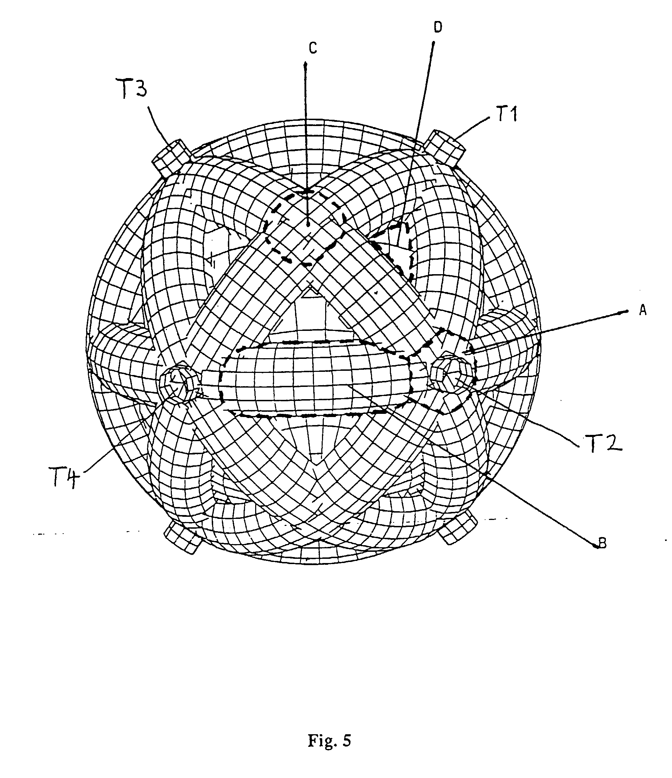

Die Fig. 5 veranschaulicht die geometrischen Verhältnisse im drei-dimensionalen Paritätsraum für das obige Beispiel mit vier Thermometern. Die vier charakteristischen Richtungen für Einzelfehler liegen hier entlang der durch die vier Thermometer T1 bis T4 definierten Raumdiagonalen (Bereiche A). Durch diese vier Richtungen werden insgesamt sechs Ebenen aufgespannt, die den jeweiligen Doppelfehlern entsprechen (Bereiche B), wobei die jeweilige Breite der angedeuteten "Wülste" die Größe der zulässigen festlegbaren Ungenauigkeiten fehlerfreier Sensoren angibt. Die Schnitte dieser Ebenen zeigen die Singularitätsbereiche, in denen eine eindeutige Doppelfehlerisolation nicht möglich ist (Bereiche C). Liegt die Richtung des Paritätsvektors in den verbleibenden Bereichen der dargestellten Kugel (Bereiche D), so liegt ein Fehler in mehr als zwei Thermometern vor, der nicht mehr isoliert werden kann. Die Breite der Bereiche hängt von der anzunehmenden Ungenauigkeit fehlerfreier Sensoren ab. In der Darstellung der Fig. 5 ist für jeden Bereich jeweils nur ein repräsentativer Bereich durch stark strichlierte Umrandung dargestellt.

**Positionsbestimmung über Messung der Pseudoentfernung zu Navigationssatelliten**

Hier soll die Positionsbestimmung aus gemessenen "Pseudoentfernungen" betrachtet werden. Die Messgleichung hat ,-hier nach der üblichen Linearisierung um einen bekannten Näherungswert für die Position-, bei $n$ beobachteten Satelliten die Form

$$s = A\,x$$

$$\begin{pmatrix} s_1 \\ \vdots \\ s_n \end{pmatrix} = \begin{pmatrix} a_{1x} & a_{1y} & a_{1z} & 1 \\ & \vdots & & \\ a_{nx} & a_{ny} & a_{nz} & 1 \end{pmatrix} \begin{pmatrix} x \\ y \\ z \\ c\cdot\delta t \end{pmatrix}$$

$$a_{ix}^2 + a_{iy}^2 + a_{iz}^2 = 1$$

wobei die Komponenten $s_i$ des Messvektors die gemessenen Pseudoentfernungen zu den einzelnen Satelliten, $x,y,z$ und $\delta t$ die Komponenten der Ortskorrektur beziehungsweise den Fehler der Empfängeruhr kennzeichnen. Die ersten 3 Elemente jeder Zeile in der Meßmatrix sind jeweils die Richtungscosinus der Verbindungslinie zwischen Satellit und der genäherten Position.

Da sich hier die Messmatrix $A$ abhängig von der jeweiligen Satellitenkonstellation ändert, müssen die weiteren Verfahrensschritte zur Fehlererkennung und Isolation, das heißt die Berechnung der Paritätstransformation $V$, dynamisch durchgeführt werden. Dabei kann jedoch weitgehend auf ohnehin für die Positionsbestimmung ermittelte Größen zurückgegriffen werden.

Ohnehin benötigt wird die Transformationsmatrix

$$H = (A^T A)^{-1} A$$

woraus sich durch

$$R = 1 - AH$$

die Residuenmatrix R bestimmen läßt. Hieraus läßt sich mittels numerischer Standardverfahren ein orthonormaler Satz von Eigenvektoren von R zum Eigenwert 1 bestimmen, die jeweils als Zeilenvektor die Zeilen der Matrix V bilden. Der mittels

$$p = V\,s$$

bestimmte Paritätsvektor wird dann auf die, durch die zulässigen Satellitenkombinationen bestimmten, charakteristischen Unterräume projiziert und in der oben beschriebenen Weise eine optimal konsistente Satellitenkombination bestimmt. Bei der Bestimmung der zulässigen Satellitenkombinationen ist hier darauf zu achten, daß nur solche Kombinationen mit einem ausreichenden DOP-Wert betrachtet werden.

Wegen der sich ändernden Satellitenkonstellation kommt eine off-line Vorabberechnung einer Entscheidungstabelle, in der für alle Richtungen des Paritätsvektors eine Isolationsentscheidung gespeichert ist, nicht in Frage. Allerdings kann eine solche Berechnung von einer Hintergrundstask durchgeführt werden, da sich die Satellitenkonstellation nur langsam ändert.

**Patentansprüche**

1. Verfahren zur Minimierung von aus mit möglichen Meßfehlern behafteten Sensoren abgeleiteten Meßgrößen, die über eine Mehrzahl solcher zu einer Meßanordnung verbundener redundanter Sensoren erfaßt werden, durch Erkennen und Isolation eines fehlerhaften Sensors, wobei:

a) die von allen Sensoren gemessenen, zu einem Meßvektor kombinierten Sensorwerte durch eine lineare Transformation in einen Vektor in einem Paritätsraum (Paritätsvektor) abgebildet werden, dessen Dimension durch die Redundanz der Meßanordnung, d.h. durch die Anzahl und/oder Orientierung der Sensoren und die Dimension der zu messenden Größe bestimmt ist; und

b) die absolute Größe des Paritätsvektors bestimmt und gegenüber einer ersten Detektionsschwelle verglichen wird, und falls diese erste Detektionsschwelle nicht überschritten wird, auf fehlerfreien Zustand geschlossen wird,

c) bei Überschreiten der Detektionsschwelle zum Erkennen und Isolieren von mehreren gleichzeitig auftretenden fehlerhaften Sensoren der gemessene Paritätsvektor auf alle für die möglichen Fehlerzustände charakteristischen Unterräume projiziert wird, deren Dimensionen bestimmt sind durch die zu dem jeweiligen Fehlerzustand gehörende Anzahl möglicher fehlerhafter Sensoren, und zur Fehlerisolation festgestellt wird, welche Projektion des Paritätsvektors auf einen, jeweils zu der betreffenden Fehlerbestimmungsstufe gehörenden Unterraum den größten Anteil des gemessenen Paritätsvektors liefert, dadurch gekennzeichnet, daß sodann

d) geprüft wird, ob der verbleibende Restfehler eine zweite Detektionsschwelle überschreitet, und falls diese zweite Detektionsschwelle nicht überschritten wird, zum Verfahrensschritt e) übergegangen wird, während, wenn diese zweite Detektionsschwelle überschritten wird, mit der nächsten Fehlerbestimmungsstufe und dekrementierter zweiter Detektionsschwelle wiederum die Verfahrensschritte c) und analog d) durchgeführt werden, und daß

e) durch Weglassen der zu den jeweiligen Unterräumen mit größtem Anteil des Paritätsvektors gehörenden Sensorwertekombination auf der betreffenden Fehlerbestimmungsstufe die beste Sensorkombination ermittelt wird.

2. Verfahren nach Anspruch 1, **dadurch gekennzeichnet**, daß die Fehlerisolation durch Berechnung aller möglichen Projektionen der Paritätsvektoren auf die charakteristischen Unterräume off-line oder durch eine Hintergrundverarbeitung durchführt und das Ergebnis in einer Tabelle gespeichert bereitgehalten wird, auf deren Elemente über die entsprechend codierte Richtung des Paritätsvektors als Tabellenschlüssel zurückgegriffen wird.

3. Verfahren nach Anspruch 1 oder 2, **dadurch gekennzeichnet**, daß die Detektionsschwellen durch externe Vorgabe wählbar sind.

4. Verfahren nach einem der vorhergehenden Ansprüche, **dadurch gekennzeichnet**, daß zumindest die erste Detektionsschwelle durch mögliche Rauschwerte und/oder zulässige Ungenauigkeiten der Sensoren bestimmt ist.

5. Verfahren nach einem der vorhergehenden Ansprüche, **dadurch gekennzeichnet**, daß bei der Vorgabe der Detektionsschwellen die Anzahl der Sensoren berücksichtigt wird.

**Claims**

1. A procedure for minimising measurement sizes which are derived from sensors affected by possible measurement errors and which are obtained via a plurality of such redundant sensors linked to a measurement arrangement, by means of the recognition and isolation of a defective sensor, whereby:

a) the sensor values which are taken from all the sensors and combined into a measurement vector are reproduced by means of linear transformation into a vector within a parity zone (parity vector) the dimension of which is determined by the redundancy of the measurement arrangement, i.e. by the number and/or the orientation of the sensors and the dimension of the size which is to be measured and

b) the absolute size of the parity vector is defined and compared with an initial detection threshold, and, in the event that this initial detection threshold is not exceeded, is concluded to be in an error-free condition,

c) in the event that the detection threshold for the recognition and isolation of a plurality of simultaneously arising defective sensors is exceeded, the measured parity vector is projected upon all sub-zones which are characteristic of the possible error conditions and whose dimensions are determined by the number of possible defective sensors belonging to the specific error condition, and, for error isolation, it is established which projection of the parity vector, upon a sub-zone belonging specifically to the relevant error definition level, produces the greatest proportion of the measured parity vector, characterised in that, subsequently,

d) a check is made in order to establish whether the remaining residual error exceeds a second detection threshold, and, in the event that this second detection threshold is not exceeded, procedure step e) is embarked upon, whereby, if this second detection threshold is exceeded, the procedure steps c) and similarly d) are again carried out with the next error definition level and decremented second detection threshold, and that,

e) by omitting, on the relevant error definition level, the sensor value combination belonging, with the greatest proportion of the parity vector, to the specific sub-zones, the best sensor combination is established.

2. A procedure according to claim 1, characterised in that the error isolation, using either off-line or background processing, is carried out by means of calculating all possible projections of the parity vectors upon the characteristic sub-zones, with the result being kept available stored in tabular form, to the various elements of which reference can be made as a tabular key code about the correspondingly coded direction of the parity vector.

3. A procedure according to claim 1 or 2, characterised in that the detection thresholds can be chosen by means of external selection.

4. A procedure according to one of the preceding claims, characterised in that at least the initial detection threshold is determined by means of possible noise values and/or permissible inaccuracies of the sensors.

5. A procedure according to one of the preceding claims, characterised in that, for the selection of the detection thresholds the number of sensors is taken into consideration.

## Revendications

1. Procédé pour minimaliser des grandeurs mesurées dérivées de capteurs affectés d'éventuelles erreurs de mesure et enregistrées à l'aide d'une pluralité de tels capteurs redondants connectés en un agencement de mesure, par détection et isolement d'un capteur défectueux, dans lequel :

a) les valeurs captées mesurées par tous les capteurs et combinées en un vecteur de mesure sont représentées à l'aide d'une transformation linéaire par un vecteur dans un espace de parité (vecteur de parité) dont la dimension est déterminée par la redondance de l'agencement de mesure, c'est-à-dire par le nombre et/ou l'orientation des capteurs et par la dimension de la grandeur à mesurer ; et
b) la grandeur absolue du vecteur de parité est déterminée et comparée à un premier seuil de détection et, dans le cas où ledit premier seuil de détection n'est pas franchi, l'état sans erreur est prononcé,
c) en cas de franchissement du seuil de détection, pour détecter et isoler plusieurs capteurs défectueux apparaissant simultanément, le vecteur de parité mesuré est projeté sur tous les sous-espaces caractéristiques des états d'erreur possibles, les dimensions desdits sous-espaces étant déterminées par le nombre de capteurs défectueux possibles appartenant à l'état d'erreur en question et, pour isoler les erreurs, on vérifie laquelle des projections du vecteur de parité sur un sous-espace appartenant au degré de détermination d'erreur concerné fournit la majeure partie du vecteur de parité mesuré, caractérisé en ce qu'ensuite
d) on vérifie si l'erreur résiduelle subsistante excède un deuxième seuil de détection et, dans le cas où ce deuxième seuil de détection n'est pas franchi, on passe à l'étape de procédé e) tandis que, si ce deuxième seuil de détection est franchi, on répète les étapes de procédé c) et, de manière analogue, d) avec le degré suivant de détermination d'erreur et un deuxième seuil de détection décrémenté, et en ce que
e) en supprimant la combinaison de valeurs captées appartenant aux sous-espaces constituant la majeure partie du vecteur de parité, la meilleure combinaison de capteurs est déterminée au degré de détermination d'erreur correspondant.

2. Procédé selon la revendication 1, caractérisé en ce que l'isolement d'erreur est réalisé, hors ligne ou par un traitement en tâche de fond, en calculant toutes les projections possibles des vecteurs de parité sur les sous-espaces caractéristiques, et le résultat est tenu à disposition sous forme mémorisée dans une table dont les éléments sont accessibles par l'intermédiaire de la direction à codage correspondant du vecteur de parité faisant fonction de clé de table.

3.  Procédé selon la revendication 1 ou 2, caractérisé en ce que les seuils de détection peuvent être choisis par préaffectation extérieure.

4.  Procédé selon une des revendications précédentes, caractérisé en ce qu'au moins le premier seuil de détection est déterminé par d'éventuelles valeurs de bruit et/ou imprécisions admises des capteurs.

5.  Procédé selon une des revendications précédentes, caractérisé en ce que le nombre de capteurs est pris en compte lors de la préaffectation des seuils de détection.

Fig. 1

Fig. 2

**Fig. 3**

```
                    1
            Bestimmung des
            Paritätsvektors:
               p := V s
         sowie dessen Länge:
               δ := p p,
            Fehlerstufe f:=0
```

```
                    2
              Vergleiche
            Inkonsistenz mit                    nein
             Schwellwert:
               δ > S(0)
```

ja

```
                    4
             Inkrementiere
             Fehlerstufe:
               f:=f+1
```

```
                    6
               Für alle
           Fehlerkombinationen
           dieser Fehlerstufe:
             p(k):=C(k) p
                 und
             δ(k):=|p(k)|
              Bestimme:
        kmax, δ(kmax), so daß
         δ(kmax)=max{δ(k)}
```

```
                    7
         Verbleibende Senoren                    ja
             konsistent?:
          δ-δ(kmax)<S(f)
```

nein

```
                    5
              Maximale
              Fehlerstufe
              erreicht?
```
nein

```
                    9
              Warnung:
           Zu viele Sensoren
              fehlerhaft
```

```
                    3
              Fehlerfrei:
         Benutze alle Sensoren.
```

```
                   11
                 Ende
```

```
                   10
          Isoliere die zukmax
               gehörige
            Sensorkombination
          dieser Fehlerstufe als
              fehlerhaft.
```

```
                   11
                 Ende
```

Fig. 4

```
                    ┌─────────────────┐
                    │        1        │
                    │  Patitätsvektor │
                    │   ist bestimmt  │
                    └────────┬────────┘
                             │
  Betrag des                 ▼
  Paritätsvektors   ┌─────────────────┐
                    │        2        │
                    │    Normiere     │
                    │ Paritätsvektor  │
                    └────────┬────────┘
                             │
                             ▼
                    ┌─────────────────┐    Tabellenschlüssel
                    │        3        │
                    │    Ermittle     ├──────────────────────┐
                    │ Tabellenschlüssel│                     │
                    │ aus Orientierung │                     ▼
                    └────────┬────────┘        ┌──────────────────────────┐
                             │                 │                          │
                             ▼                 │           4              │
                    ┌─────────────────┐        │                          │
                    │        5        │        │      Gespeicherte        │
                    │                 │        │  Projektionsergebnisse   │
                    │  Detektion und  │        │                          │
                    │Isolationsentscheidung│    └──────────────────────────┘
                    └────────┬────────┘   Isolationsinformation
                             │
                             ▼
                    ┌─────────────────┐
                    │        6        │
                    │      Ende       │
                    └─────────────────┘
```

Fig. 5